# EUROPÄISCHE PATENTANMELDUNG

(11) **EP 0 704 633 A2**
(43) Veröffentlichungstag der Anmeldung: **03.04.1996**
(21) Anmeldenummer: 95306762.6
(22) Anmeldetag: 26.09.1995
(51) Int. Cl.: F16B 19/10

(54) **Befestigungsmittel**

(30) Priorität: 28.09.1994 GB 9419653
(71) Anmelder: ITW Limited, Windsor Berkshire SL4 3BD (GB)
(72) Erfinder: Howard, Mark, Cosham, Portsmouth (GB)
(74) Vertreter: Gordon, Michael Vincent

(57) **Abstract**

A fastener (10) comprises a hollow body portion (12) and a plurality of legs (14) extending therefrom; characterised in that an inner surface (16) and an outer surface (18) of at least one of the plurality of legs (14) diverge from one another to be increasingly separated with increasing distance from the hollow body portion (12); wherein, in use, the fastener (10) can be located in an apertured panel (34), and a workpiece (36) can be inserted through the hollow body portion (12) to cause the plurality of legs (14) to spread, thereby trapping the apertured panel (34) between the hollow body portion (12) and the plurality of legs (14).

## Beschreibung

The present invention relates generally to fasteners and is more especially but not exclusively concerned with fasteners for use in the mounting of push-button switches in domestic appliances.

The domestic appliance market is very cost competitive and it is therefore important commercially for all components to be not only inexpensive to manufacture but also inexpensive to install.

With particular reference to the mounting of a push-button switch in a domestic appliance, it would be beneficial if a fastener could be provided which allowed the push-button switch to be firmly secured to an apertured panel, even if the apertured panel was not of accurate thickness and was not accessible from both sides.

According to the present invention, a fastener comprises a hollow body portion and a plurality of legs extending therefrom;
characterised in that an inner surface and an outer surface of at least one of the plurality of legs diverge from one another to be increasingly separated with increasing distance from the hollow body portion;
wherein, in use, the fastener can be located in an apertured panel, and a workpiece can be inserted through the hollow body portion to cause the plurality of legs to spread, thereby trapping the apertured panel between the hollow body portion and the plurality of legs.

Clearly, it is only necessary for the apertured panel to be accessible from one side to allow location of the fastener and insertion of the workpiece. Moreover, it is possible for the plurality of legs to be spread by different amounts, depending on the thickness of the apertured panel, yet still provide firm retention therewith.

Preferably, the legs are substantially identical and, initially, their inner surfaces are together generally frusto-conical and their outer surfaces are together generally cylindrical.

Preferably, the fastener is provided with one or both of a resiliently deformable seal for abutting engagement with the apertured panel and a resiliently deformable seal for abutting engagement with the workpiece.

The seal for abutment with the apertured panel may be an annular lip seal, whereas the seal for abutment with the workpiece may be an annular bellows seal.

Preferably, the fastener is provided with an internal groove and the workpiece is provided with one or more external ribs.

The arrangement may be such that the fastener can be initially assembled with the workpiece by engagement of the internal groove with one of the external ribs and, after spreading of the plurality of legs, the fastener can be finally assembled with the workpiece by engagement of the internal groove with the other of the external ribs.

The internal groove may be presented by the hollow body portion or the plurality of legs or at the junction thereof and the external ribs may be presented by an outer cylindrical casing within which another part of the workpiece may itself be axially movable.

It is possible, but less desirable, that the fastener should present an internal rib and that the workpiece should present one or more external grooves.

It will be appreciated that the fastener is capable of being formed in one piece by moulding of a plastics material.

It will also be appreciated that the workpiece may be but is not restricted to being a push-button switch.

A fastener, in accordance with the present invention, will now be described in greater detail, by way of example only, with reference to the accompanying drawings, in which:-
Figure 1 is an axial cross-sectional view through the fastener according to the present invention;
Figures 2a, 2b and 2c are side views showing the fastener in combination with a push-button switch at different stages during the assembly thereof; and
Figures 3a, 3b and 3c are schematic cross-sectional views corresponding respectively to the side views of Figures 2a, 2b and 2c but also showing an apertured panel.

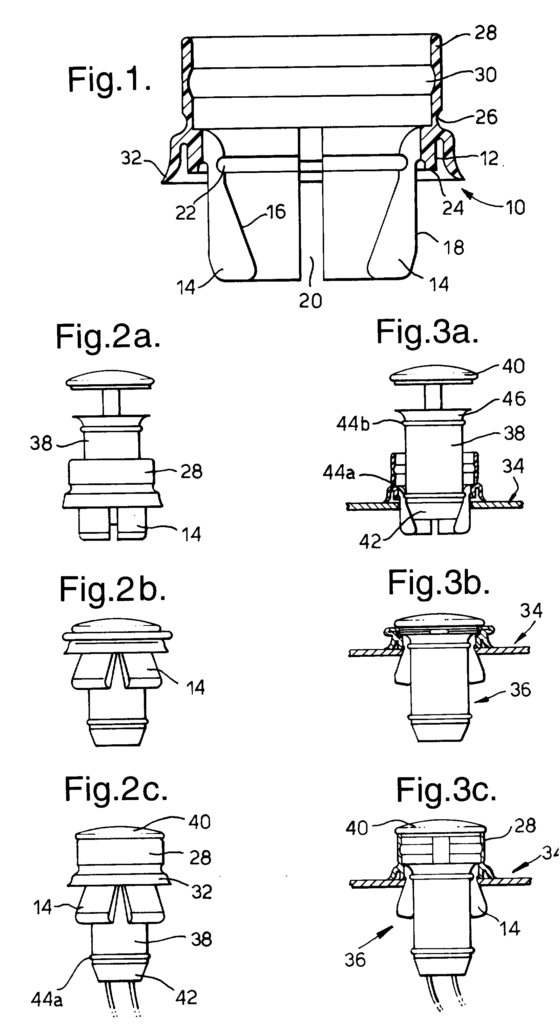

As shown in Figure 1, a fastener 10 in accordance with the present invention comprises a hollow body portion 12 and a plurality of legs 14 extending therefrom with an inner surface 16 and an outer surface 18 of at least one of the plurality of legs 14 diverging from one another to be increasingly separated with increasing distance from the hollow body portion 12.

In the illustrated fastener 10, there are four of the legs 14 which are substantially identical and are separated by axially extending slots 20 with, initially, their inner surfaces 16 together being generally frusto-conical and their outer surfaces 18 together being generally cylindrical.

An internal groove 22 is provided in the legs 14 near the junction of the legs 14 with the body portion 12. One end of the body portion 12 is in the form of an annular abutment 24 for limiting insertion of the fastener 10 into an apertured panel. The other end of the body portion 12 has a seal 26 in the form of a cylinder 28 with an internal annular groove 30 which allows the cylinder 28 to flex in the manner of a bellows. Finally, an outer side surface of the body portion 12 is provided with an annular lip seal 32.

The manner of use of the fastener 10 will now be described.

Although not necessarily restricted to such an application, the fastener 10 is intended for use with an apertured panel 34 and a push-button switch 36. The apertured panel 34 may have a circular aperture therethrough and may form part of a conventional domestic appliance. The push-button switch 36 may again be of a conventional construction in providing an outer cylindrical casing 38 within which a push-button 40 is axially movable to effect operation of an electrical switch.

The cylindrical casing 38 is here additionally provided with a frusto-conical leading end 42, a pair of axially spaced external annular ribs 44a, 44b and an outwardly flared trailing end 46.

As shown in Figure 2a, the fastener 10 and the push-button switch 36 can be pre-assembled and the pre-assembly can be by engagement of the internal groove 22 of the fastener 10 with the rib 44a of the push-button switch 36, as shown in Figure 3a, which also shows an initial location in which the annular abutment 24 of the fastener 10 is almost in engagement with the accessible side of the apertured panel 34.

To effect fixing, it is merely necessary to press on the push-button 40. This causes the entire push-button switch 36 to move through the fastener 10. During this movement, the cylindrical casing 38 causes the legs 14 to be spread apart from one another as shown in Figures 2b and 3b. The apertured panel 34 becomes firmly trapped between the annular abutment 24 and the plurality of legs 14. At the same time, the lip seal 32 is resiliently deformed into sealing abutment with the apertured panel 34 and the internal groove 22 of the fastener 10 snaps into engagement with the rib 44b of the push-button switch 36. The bellows seal 26 is fully flexed about its internal annular groove 30.

Upon release of the push-button 40, it is caused to move away from the cylindrical casing 38 as a result of spring-biasing in the push-button switch 36, yet the bellows seal 26 unflexes to maintain its sealing engagement with the push-button 40, as shown in Figures 2c and 3c.

The fastener 10 may moulded of any plastics material which is sufficiently resiliently deformable.

## Claims

1. A fastener (10) comprising a hollow body portion (12) and a plurality of legs (14) extending therefrom;
characterised in that an inner surface (16) and an outer surface (18) of at least one of the plurality of legs (14) diverge from one another to be increasingly separated with increasing distance from the hollow body portion (12);
wherein, in use, the fastener (10) can be located in an apertured panel (34), and a workpiece (36) can be inserted through the hollow body portion (12) to cause the plurality of legs (14) to spread, thereby trapping the apertured panel (34) between the hollow body portion (12) and the plurality of legs (14).

2. A fastener according to claim 1, characterised in that the legs (14) are substantially identical and, initially, their inner surfaces (16) are together generally frusto-conical and their outer surfaces (18) are together generally cylindrical.

3. A fastener according to claim 1 or claim 2, characterised in that a resiliently deformable seal (32) is provided for abutting engagement with the apertured panel (34).

4. A fastener according to claim 3, characterised in that the seal for abutment with the apertured panel (34) is an annular lip seal (32).

5. A fastener according to any one of claims 1 to 4, characterised in that a resiliently deformable seal (26) is provided for abutting engagement with the workpiece (36).

6. A fastener according to claim 5, characterised in that the seal for abutment with the workpiece (36) is an annular bellows seal (26).

7. A fastener according to any preceding claim, characterised in that the fastener (10) is provided with an internal groove (22), or rib, for use in enabling the fastener (10) to be assembled with one or more external ribs (44a,44b), or grooves, provided by the workpiece (36).

8. A fastener according to claim 7, characterised in that the fastener (10) is provided with an internal groove (22) and the workpiece (36) is provided with two axially spaced external ribs (44a,44b) wherein, in use, the fastener (10) can be initially assembled with the workpiece (36) by engagement of the internal groove (22) with one of the external ribs (44a) and, after spreading of the plurality of legs (14), the fastener (10) can be finally assembled with the workpiece (36) by engagement of the internal groove (22) with the other of the external ribs (44b).

9. A fastener according to any preceding claim, characterised by being formed in one piece by moulding of a plastics material.

10. A fastener according to any preceding claim, characterised by being in combination with both an apertured panel (34) and a workpiece in the form of a push-button switch (36) which is mounted to the apertured panel (34) by the fastener (10).
